# EUROPÄISCHE PATENTSCHRIFT

(11) **EP 2 539 188 B1**
(45) Veröffentlichungstag und Bekanntmachung des Hinweises auf die Patenterteilung: **24.12.2014**
(21) Anmeldenummer: 11707580.4
(22) Anmeldetag: 24.02.2011
(51) Int. Cl.: B60R 25/02

(54) **LENKSCHLOSSVORRICHTUNG FÜR EIN KRAFTFAHRZEUG**
STEERING LOCKING DEVICE FOR A VEHICLE
DISPOSITIF DE BLOCAGE DE DIRECTION POUR VÉHICULE

(30) Priorität: 26.02.2010 DE 102010009547
(43) Veröffentlichungstag der Anmeldung: 02.01.2013
(73) Patentinhaber: Marquardt GmbH, 78604 Rietheim-Weilheim (DE)
(72) Erfinder: KUSKE, Tim, 78549 Spaichingen (DE)
(74) Vertreter: Roth, Klaus
(86) Internationale Anmeldenummer: PCT/EP2011/000886
(87) Internationale Veröffentlichungsnummer: WO 2011/104017

(56) Entgegenhaltungen:
- EP-A1- 2 048 045
- EP-A2- 1 953 050
- WO-A2-03/099613
- GB-A- 2 459 042
- US-A1- 2009 139 285

## Beschreibung

Die Erfindung betrifft eine Lenkradsäule mit Verriegelungseinrichtung nach dem Oberbegriff des Patentanspruchs 1.

Derartige Verriegelungseinrichtungen dienen als Lenkungsverriegelung zum Versiegeln bzw. zum mechanischen Blockieren der Lenkradwelle, die in der Lenkradsäule bzw. im sogenannten Mantelrohr in einem Kraftfahrzeug oder einem Nutzfahrzeug angeordnet ist, um den Diebstahlschutz zu erhöhen. Sie werden insbesondere bei Betätigung des Zündschlosses im Kraftfahrzeug ver- und/oder entriegelt.

In Kraftfahrzeugen kann anstelle eines mechanischen Zündschlosses ein elektronisches Zündschloß verwendet werden. Zur näheren Ausgestaltung eines elektronischen Zündschlosses wird auf die DE 44 34 587 A1 verwiesen.

Bei einem elektronischen Zündschloß kann auch die Lenkungsverriegelung beispielsweise durch einen Elektromotor oder einen Elektromagneten angetrieben werden. Der Elektromotor oder der Elektromagnet wird nur dann zur Entriegelung betrieben, wenn die codierten Daten des elektronischen Schlüssels richtig sind. Es handelt sich bei einer derartigen Lenkungsverriegelung um eine sogenannte elektrische und/oder elektronische Lenkungsverriegelung.

Eine derartige Verriegelungseinrichtung besitzt einen zwischen einer ersten und einer zweiten Position bewegbaren Sperrbolzen zur Verriegelung der Lenkradwelle in der Lenkradsäule. Der Sperrbolzen ist in der ersten Position in blockierenden Eingriff mit der Lenkradwelle bringbar und steht in der zweiten Position außer Eingriff mit der Lenkradwelle. Ein Antrieb, bei dem es sich beispielsweise um einen Elektromotor handelt, der durch Anlegen von elektrischer Spannung in der jeweiligen Drehrichtung betrieben wird, dient zur Bewegung des Sperrbolzens. Um einen guten Diebstahlschutz für das Kraftfahrzeug zu bieten, ist die Verriegelungeinrichtung massiv ausgestaltet, beispielsweise mit einem aus Metall bestehenden, an der Lenkradsäule anordenbaren Gehäuse zur Aufnahme des Antriebs sowie des Sperrbolzens. Eine solche Verriegelungseinrichtung für ein Kraftfahrzeug ist aus der DE 102 46 225 A1 bekannt.

Die EP 1 953 050 offenbart eine Verriegelungseinrichtung nach dem Oberbegriff des Anspruchs 1.

Der Erfindung liegt die Aufgabe zugrunde, die Lenkradsäule mit Verriegelungseinrichtung bei guter Diebstahlsicherheit einfacher auszugestalten. Insbesondere soll die Realisierung eines Konzepts bereitgestellt werden, mit dem eine Gewichts- und/oder Kostenoptimierte elektrische Lenkungsverriegelung hergestellt werden kann.

Diese Aufgabe wird bei einer gattungsgemäßen Lenkradsäule mit Verriegelungseinrichtung durch die kennzeichnenden Merkmale des Patentanspruchs 1 gelöst.

Während beim Stand der Technik der Sperrbolzen eine Komponente der Verriegelungseinrichtung ist, ist bei der erfindungsgemäßen Verriegelungseinrichtung anders als im Stand der Technik der Sperrbolzen ein Bestandteil der Lenkradsäule und damit außerhalb des Gehäuses befindlich. Zweckmäßigerweise ist in kompakter Ausgestaltung der Sperrbolzen in die Lenkradsäule integriert. Geschaffen ist somit vorteilhafterweise eine Kraftabstützung der elektrischen und/oder elektronischen Lenkungsverriegelung (ELV) in der bereits an sich massiv ausgestalteten Lenksäule, so dass bei der Lenkungsverriegelung eine an sich weniger massive Ausführung ausreichend ist. Weitere Ausgestaltungen der Erfindung sind Gegenstand der Unteransprüche.

Um eine einfache und schnelle Montage der Verriegelungseinrichtung zu ermöglichen, ist in weiterer Ausgestaltung ein Übertragungsmittel als Antriebsmittel zwischen dem Antrieb und dem Sperrbolzen angeordnet. Das Übertragungsmittel ist im Gehäuse befindlich, ragt aber aus dem Gehäuse heraus, so dass das Übertragungsmittel mit dem Sperrbolzen zu dessen Bewegung zusammenwirken kann. Das Übertragungsmittel kann als ein Umlenkhebel ausgestaltet sein. Weiterhin bietet es sich dann an, dass ein Kopplungsmittel zwischen dem Übertragungsmittel und dem Sperrbolzen befindlich ist. In einfacher Art und Weise kann das Kopplungsmittel aus einer Aussparung im Sperrbolzen sowie einem Zapfen am Umlenkhebel bestehen. Im montierten Zustand greift der Zapfen in die Aussparung ein, womit die Verriegelungseinrichtung für deren Montage lediglich in einfacher Weise auf die Lenkradsäule aufzuschieben ist.

In üblicher Weise besitzt entsprechend einer weiteren Ausbildung die Verriegelungseinrichtung ein Gehäuse, das zweckmäßigerweise einen Deckel sowie einen Sockel umfassen kann. In weiterer Ausgestaltung besteht das Gehäuse wenigstens teilweise, bevorzugterweise jedoch das gesamte Gehäuse, aus Kunststoff. Der wegen der Notwendigkeit zur Aufnahme von hohen Kräften bisher aus Metall, beispielsweise aus Zink bzw. Zinkdruckguss, bestehende Sockel kann nunmehr ebenfalls aus Kunststoff bestehen. Insbesondere bietet es sich an, dass es sich bei dem Kunststoff um einen thermoplastischen Kunststoff handelt. Dann kann der Sockel sowie der Deckel in einfacher sowie kostengünstiger Weise als ein Spritzgießteil herstellbar sein.

In weiterer Ausgestaltung bietet es sich an, dass ein Führungsmittel für den Sperrbolzen mit dem Sperrbolzen zu dessen Kraftabstützung zusammenwirkt. Damit werden auf den Sperrbolzen einwirkende Kräfte, beispielsweise bei einem Aufbruchversuch an der Verriegelungseinrichtung, zunächst vom Führungsmittel aufgenommen und anschließend in die Lenkradsäule eingeleitet, womit die Widerstandsfähigkeit des Sperrbolzens weiter erhöht ist. Zweckmäßigerweise ist das Führungsmittel für den Sperrbolzen ebenfalls ein Bestandteil der Lenkradsäule, insbesondere indem das Führungsmittel in die Lenkradsäule integriert ist. Die Integration kann in einfacher Art und Weise dadurch erreicht werden, indem eine Führungsplatte an der Lenkradsäule zur Aufnahme des Sperrbolzens und/oder des Führungsmittels angeordnet ist. Im Hinblick auf die Kompaktheit bietet es sich dann weiterhin an, dass eine Feder für den Sperrbolzen, die den Sperrbolzen zum Eingriff in die Lenkradwelle vorspannt, indem die Feder den Sperrbolzen mit einer elastischen Kraft in Richtung der Lenkradwelle beaufschlagt, Bestandteil der Lenkradsäule ist, und zwar insbesondere an der Führungsplatte angeordnet ist Es genügt, dass der Sperrbolzen und/oder das Führungsmittel und/oder die Führungsplatte im Hinblick auf die Aufbruchsicherheit aus Metall bestehen, während das Gehäuse wie bereits erwähnt aus Kunststoff bestehen kann.

Um die Montage im Kraftfahrzeug zu erleichtern, ist bevorzugterweise eine Führungsschiene an der Führungsplatte für die Aufnahme bei der Montage des Gehäuses an der Lenkradsäule befindlich. Das Gehäuse der Verriegelungseinrichtung lässt sich dann in einfacher Art und Weise zentriert auf die Führungsplatte aufschieben. Anschließend kann dann die Verriegelungseinrichtung mit der Führungsplatte verschraubt werden. Die Führungsplatte ist derart an der Lenkradsäule ausgerichtet angebracht, dass die Verriegelungseinrichtung in etwa in "12-Uhr"-Position auf der Lenkradsäule platziert ist. Dadurch ist nach der Montage die Verriegelungseinrichtung weitgehend von der Lenkradsäule verdeckt im inneren Bauraum am Kraftfahrzeug befindlich, womit die Zugänglichkeit zur Verriegelungseinrichtung im Hinblick auf den Diebstahlschutz erschwert ist.

Für eine besonders bevorzugte Ausgestaltung ist nachfolgendes festzustellen. Zur Realisierung einer Gewichts- und Kostenreduktion ist es erwünscht, den schweren und vor allem sehr teuren bisherigen Zinkdruckgusssockel durch einen solchen aus Kunststoff zu ersetzen. Dies ist jedoch nur möglich, wenn die im heutigen Stand der Technik im Sockel abgestützte Sperre, auf die große Kräfte wirken, und zwar beispielsweise Verspann- und/oder Missbrauchsmomente, nicht von der elektrischen Lenkungsverriegelung (ELV) abgestützt werden muss. Deshalb ist erfindungsgemäß eine Schnittstelle zur Lenksäule definiert, in der die Sperre abgestützt werden kann. Dies hat zudem den Vorteil, dass auch die Sperre sowie die Rückstellfeder aus dem System der ELV ausgegliedert werden können. Somit ist die ELV nur noch eine reine Antriebseinheit aus Kunststoff.

Die mit der Erfindung erzielten Vorteile bestehen insbesondere darin, dass eine Gewichtsreduktion sowie eine Kostenreduktion und eine verbesserte Systemzuverlässigkeit für die Verriegelungseinrichtung erreicht wird. Desweiteren erfolgt eine Aufspaltung des Gesamtsystems der elektrischen und/oder elektronischen Lenkungsverriegelung in eine Antriebseinheit und eine davon getrennte Kraftabstützung für den Sperrbolzen, was einen modularen Einsatz der Lenkungsverriegelung ermöglicht. Weiter ist es durch die Schaffung einer normierten Schnittstelle möglich, die Lenkungsvernegelung in unterschiedlichen Lenksäulen bei verschiedenen Kraftfahrzeugen einzusetzen, womit ein wichtiger Marktvorteil gegeben ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: eine Lenkradsäule für ein Kraftfahrzeug mit einer daran angeordneten Verriegelungseinrichtung,
- Fig. 2: die Verriegelungseinrichtung in perspektivischer Ansicht,
- Fig. 3: die Verriegelungseinrichtung in Richtung gemäß Pfeil III in Fig. 2 gesehen,
- Fig. 4: eine Explosionsdarstellung der Verriegelungseinrichtung,
- Fig. 5: die Verriegelungseinrichtung aus Fig. 2 mit abgenommenem Deckel,
- Fig. 6: die Verriegelungseinrichtung an der Lenkradsäule wie in Fig. 1 mit abgenommenem Deckel,
- Fig. 7: die Anordnung wie in Fig. 6, wobei die Verriegelungseinrichtung entfernt ist,
- Fig. 8: die Montage der Verriegelungseinrichtung in einem ersten Montageschritt,
- Fig. 9: die Montage der Verriegelungseinrichtung in einem weiteren zweiten Montageschritt,
- Fig. 10: die Montage der Verriegelungseinrichtung in einem abschließenden dritten Montageschritt und
- Fig. 11: den zweiten Montageschritt im Detail bei geöffnet dargestellter Verriegelungseinrichtung.

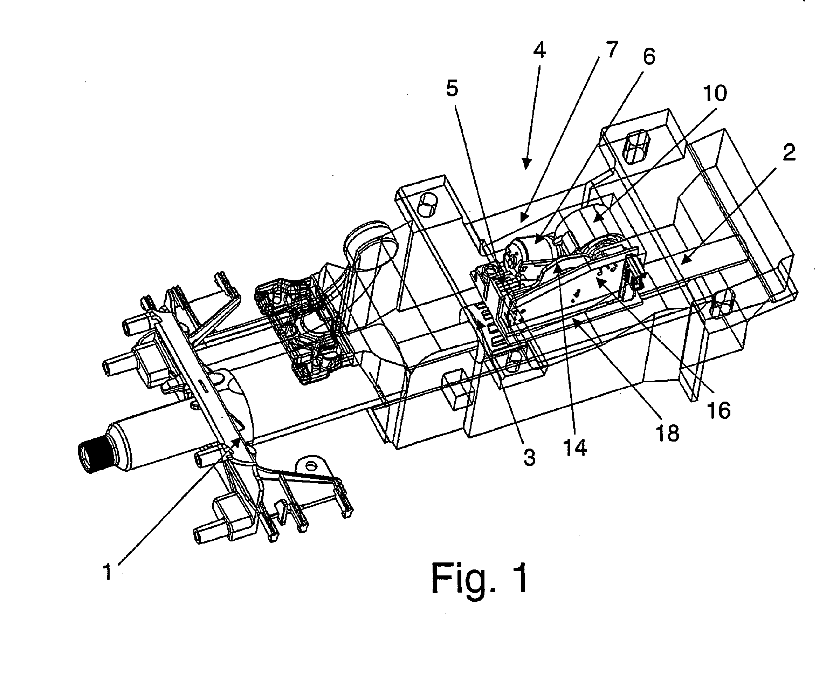

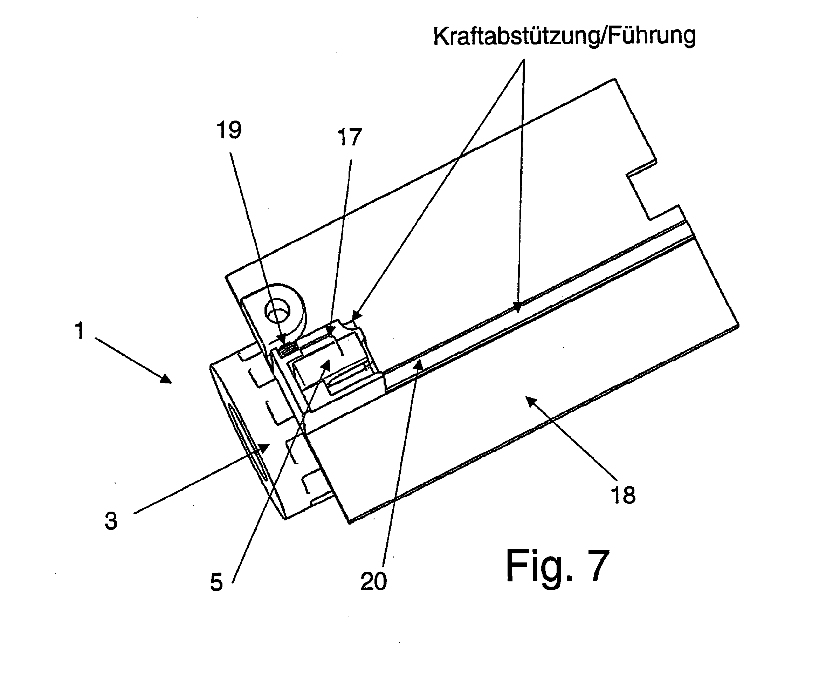

In Fig. 1 ist eine Lenkradsäule 1 in der Art eines Mantelrohres für ein Kraftfahrzeug mit einer daran angeordneten, durchsichtig dargestellten Verriegelungseinrichtung 4 zu sehen. In der Lenkradsäule 1 befindet sich eine drehbar gelagerte Lenkradwelle 2, an der sich ein der Verriegelungseinrichtung 4 zugewandter Sperrkranz 3 befindet. Die Verriegelungseinrichtung 4 weist einen zwischen einer ersten und einer zweiten Position bewegbaren Sperrbolzen 5 zur Verriegelung der Lenkradwelle 2 auf. Hierzu ist der Sperrbolzen 5 in der ersten Position in blockierenden Eingriff mit der Lenkradwelle 2 bringbar, indem der Sperrbolzen 5 blockierend in den Sperrkranz 3 eingreift. In der zweiten Position steht der Sperrbolzen 5 außer Eingriff mit der Lenkradwelle 2, indem der Sperrkranz 3 vom Sperrbolzen 5 freigegeben ist. Ein Antrieb 6 in der Verriegelungseinrichtung 4, und zwar vorliegend ein Elektromotor, dient zur Bewegung des Sperrbolzens 5. Wie man weiter der Fig. 7 entnimmt, ist der Sperrbolzen 5 ein Bestandteil der Lenkradsäule 1, und zwar ist der Sperrbolzen 5 in die Lenkradsäule 1 integriert.

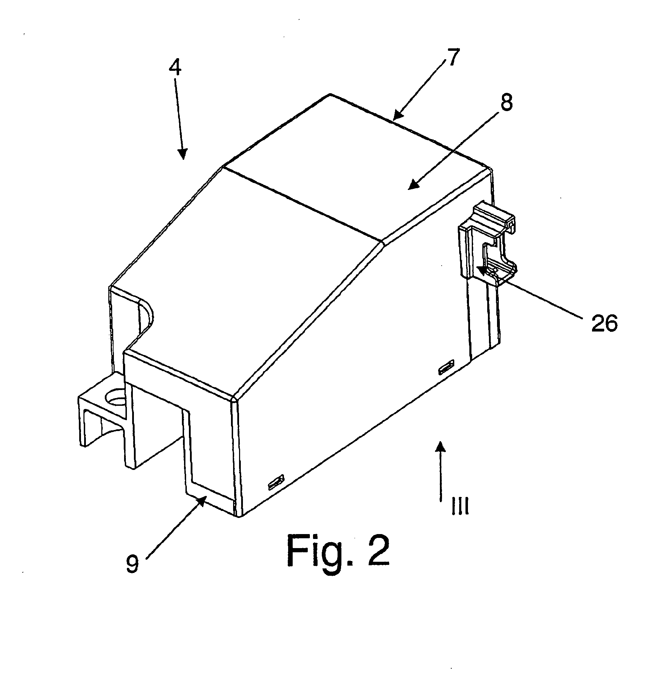

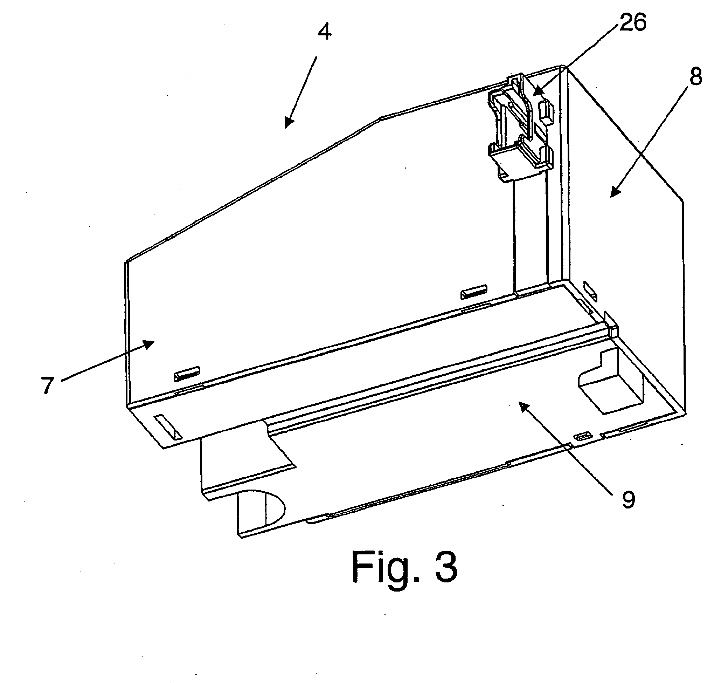

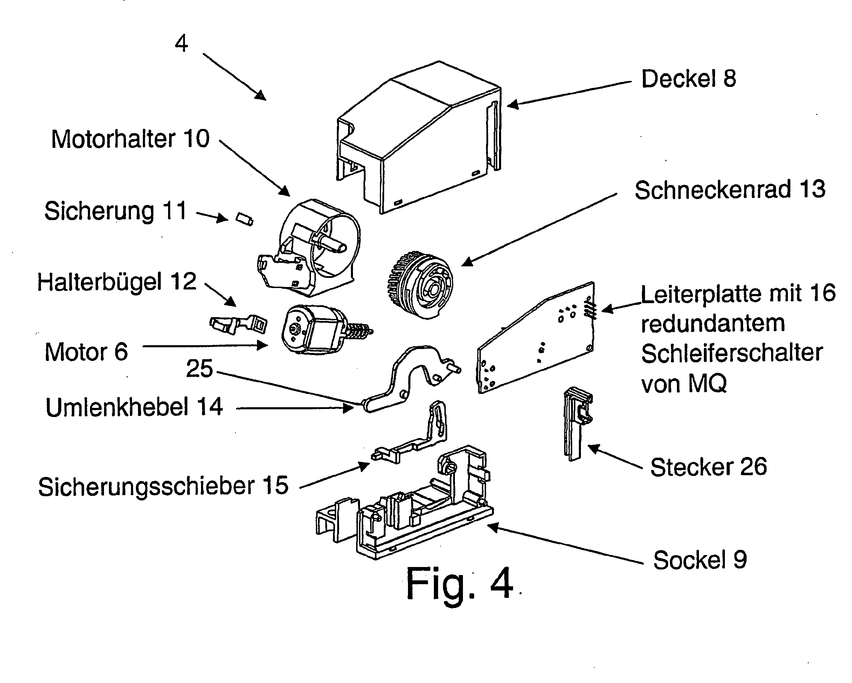

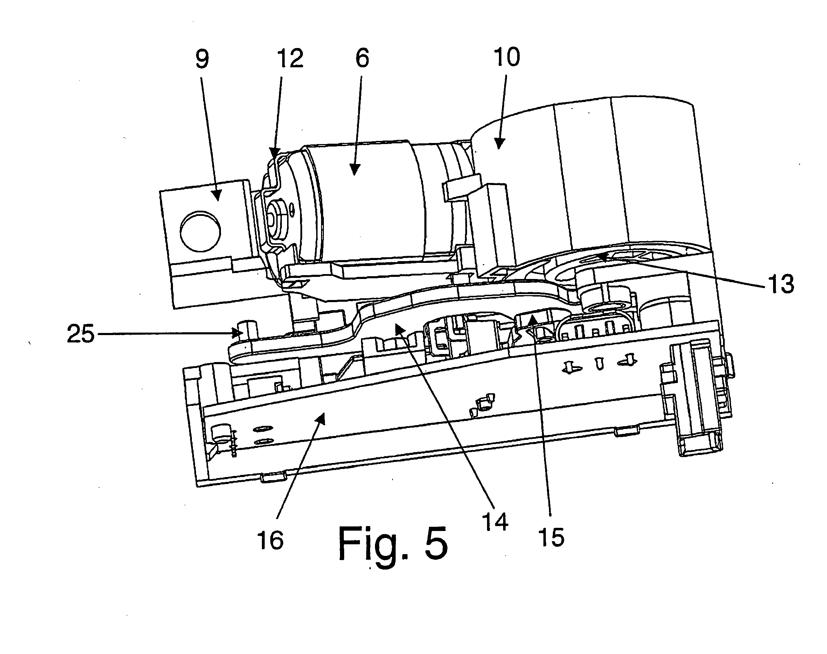

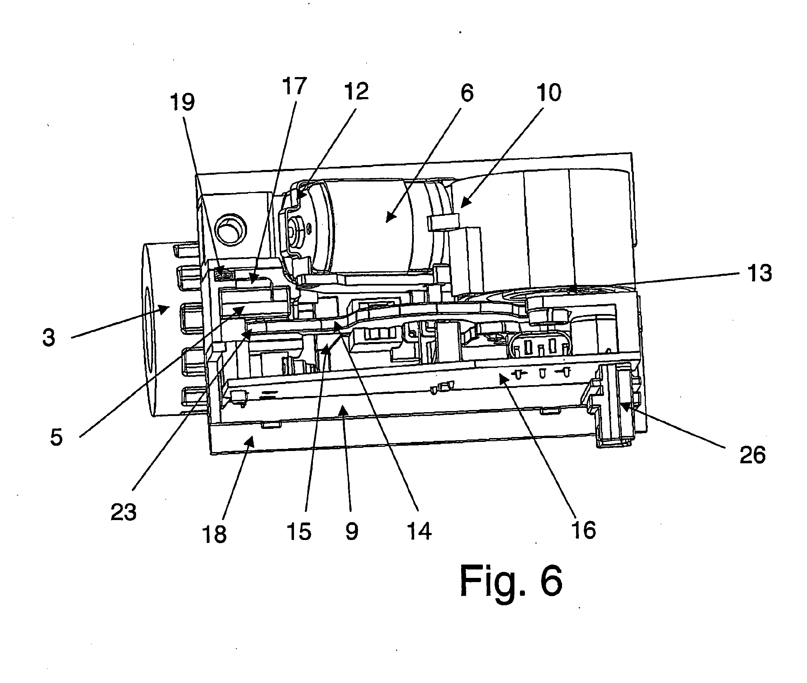

Die Verriegelungseinrichtung 4 besitzt gemäß Fig. 2 oder Fig. 3 ein an der Lenkradsäule 1 anbringbares Gehäuse 7, das wiederum aus einem Deckel 8 sowie einem Sockel 9 besteht Wie man weiter anhand von Fig. 4 sieht, umfasst die Verriegelungseinrichtung 4 einen Elektromotor 6 als Antrieb, der im Gehäuse 7 befindlich ist. Hierzu ist der Elektromotor 6 in einem auf dem Sockel 9 befestigten Motorhalter 10 aufgenommen. Im Motorhalter 10 befindet sich eine Sicherung 11 sowie ein Haltebügel 12 für den Elektromotor 6. In der Motorhalterung 10 ist weiter ein Schneckenrad 13 drehbar gelagert, das vom Elektromotor 6 angetrieben wird, und dabei gemäß Fig. 6 über ein als Umlenkhebel ausgestaltetes Übertragungsmittel 14 den Sperrbolzen 5 zwischen den beiden Positionen bewegt. Ein Sicherungsschieber 15 dient zur Arretierung des Sperrbolzens 5 in der zweiten Position, um im Falle eines auftretenden Fehlverhaltens ein Blockieren der Lenkradwelle 2 während der Fahrt des Kraftfahrzeugs zu verhindern. Im Gehäuse 7 befindet sich weiter eine Leiterplatte 16, auf der die Elektronik zur Steuerung der Verriegelungseinrichtung 4 sowie ein Schleiferschalter zur Detektierung der jeweiligen Stellung des Schneckenrades 13 befindlich ist. Schließlich ist noch eine Steckeraufnahme 26 am Gehäuse 7 zum Anschluss der Verriegelungseinrichtung 4 an das Bordnetz im Kraftfahrzeug angebracht. Die entsprechende Anordnung der im Gehäuse 7 befindlichen Einzelteile im Sockel 9 ist in Fig. 5 näher gezeigt.

Wie man anhand der Fig. 7 weiterhin sieht, wirkt ein Führungsmittel 17 mit dem Sperrbolzen 5 zusammen, derart dass das Führungsmittel 17 auf den Sperrbolzen 5 einwirkende Kräfte, und zwar vor allem aufgrund von Missbrauch auftretende Kräfte, aufnimmt. Das Führungsmittel 17 für den Sperrbolzen 5 ist ebenfalls ein Bestandteil der Lenkradsäule 1, und zwar ist das Führungsmittel 17 in die Lenkradsäule 1 integriert. Zur Integration ist eine Führungsplatte 18 an der Lenkradsäule 1 vorgesehen, wobei der Sperrbolzen 5 und/oder das Führungsmittel 17 in der Führungsplatte 18 aufgenommen ist. Außerdem kann noch eine Feder 19, die den Sperrbolzen 5 in Richtung auf den Sperrkranz 3 mit einer elastischen Kraft beaufschlagt, Bestandteil der Lenkradsäule 1 sein, und zwar insbesondere indem die Feder 19 an der Führungsplatte 18 angeordnet ist.

Der Sperrbolzen 5 und/oder das Führungsmittel 17 und/oder die Führungsplatte 18 bestehen aus Metall. Das Führungsmittel 17 bewirkt somit eine Kraftabstützung für den Sperrbolzen 5 und leitet dabei die aufgenommenen Kräfte direkt in die massive sowie stabile Lenkradsäule 1 ein, die ebenfalls aus Metall besteht. Da die Verriegelungseinrichtung 4 durch diese Kräfte folglich nicht belastet wird und somit keine Kräfte des Sperrbolzens 5 aufnehmen bzw. übertragen muss, ist das Gehäuse 7 aus Kunststoff hergestellt. Insbesondere besteht der Sockel 9 anders als bisher ebenfalls aus Kunststoff, womit eine erhebliche Gewichtsersparnis für die Verriegelungseinrichtung 4 einhergeht. Bei dem Kunststoff handelt es sich bevorzugterweise um einen thermoplastischen Kunststoff, womit der Sockel 9 sowie der Deckel 8 als ein Spritzgießteil herstellt werden kann. Zu erwähnen ist, dass auch noch weitere im Gehäuse 7 befindliche Komponenten der Verriegelungseinrichtung 4, wie der Motorhalter 10, das Schneckenrad 13, das Übertragungsmittel 14, der Sicherungsschieber 15 o. dgl., aus Kunststoff bestehen können.

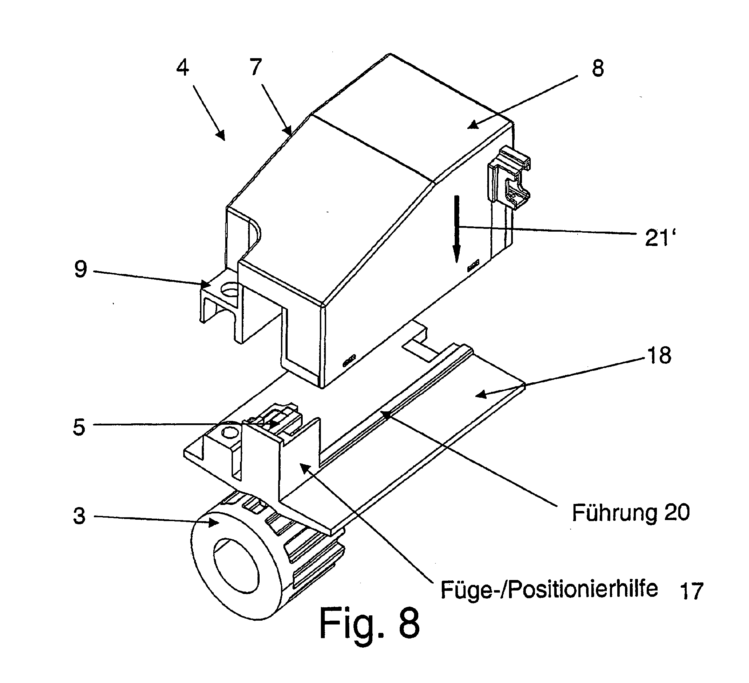

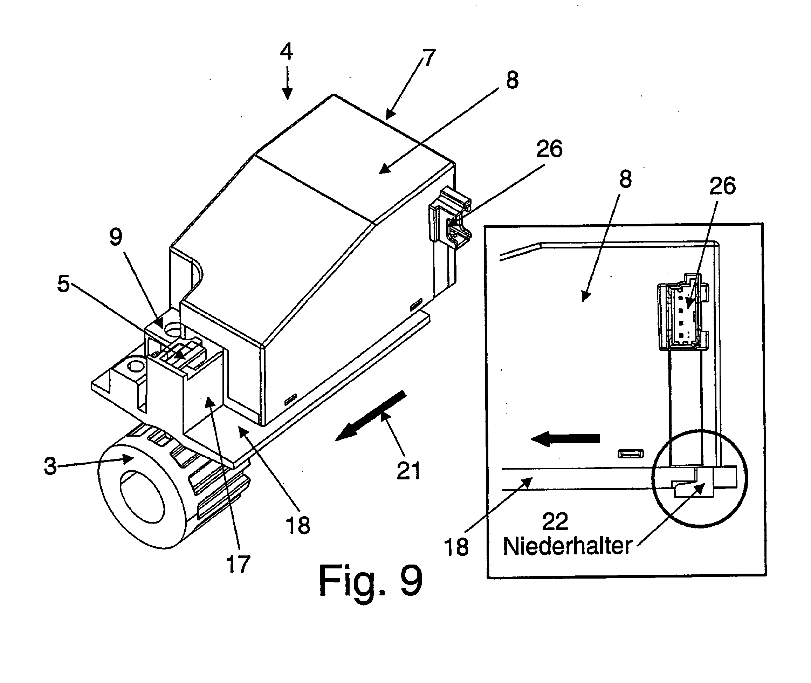

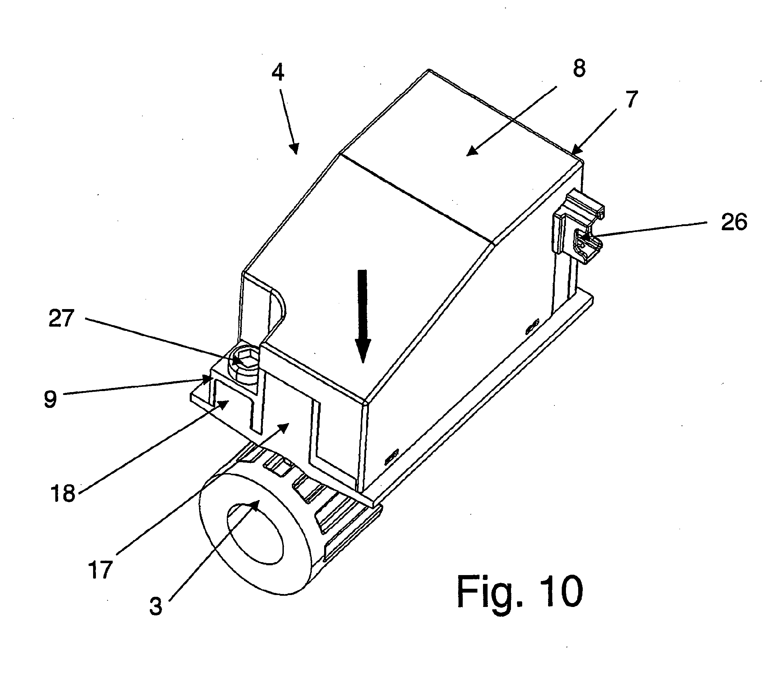

Zwecks einfacher Montage der Verriegelungseinrichtung 4 ist eine in Fig. 7 sichtbare Führungsschiene 20 an der Führungsplatte 18 befindlich. Wie man anhand von Fig. 8 erkennt, wird bei der Montage das Gehäuse 7 der Verriegelungseinrichtung 4 von oben gemäß Pfeil 21' auf die Führungsplatte 18 an der Lenkradsäule 1 aufgesetzt, wobei die Führungsschiene 20 zur entsprechenden Aufnahme und Zentrierung dient. Das Führungsmittel 17, in dem sich der Sperrbolzen 5 befindet, dient zusätzlich als Füge- und/oder Positionierhilfe. Danach wird die Verriegelungseinrichtung 4 entlang der Führungsschiene 20 in Richtung des Pfeils 21 gemäß Fig. 9 aufgeschoben. Wie man anhand der Detailansicht in Fig. 9 sieht, wird die Verriegelungseinrichtung 4 über einen Niederhalter 22 vorfixiert. Anschließend wird dann gemäß Fig. 10 die Verriegelungseinrichtung 4 mittels einer Schraube 27 mit der Führungsplatte 18 an der Lenkradsäule 1 verschraubt.

Wie man weiter anhand der Fig. 1 erkennt, ist die Verriegelungseinrichtung 4 von oben, und zwar in etwa in "12-Uhr"-Position auf der Lenkradsäule 1 platziert. Damit ist im verbauten Zustand im Kraftfahrzeug eine erschwerte Zugänglichkeit für die Verriegelungseinrichtung 4 gegeben, was den Diebstahlschutz steigert. Die bisher übliche massive Abdeckung der Verriegelungseinrichtung, beispielsweise mittels eines Blechdeckels, um die sogenannten "Thatcham"-Anforderungen im Hinblick auf den Diebstahlschutz zu erfüllen, ist damit nicht notwendig. Vielmehr kann das Gehäuse 7 der Verriegelungseinrichtung 4 komplett aus Kunststoff hergestellt werden, was eine erhebliche Gewichts- und Kostenersparnis bedeutet.

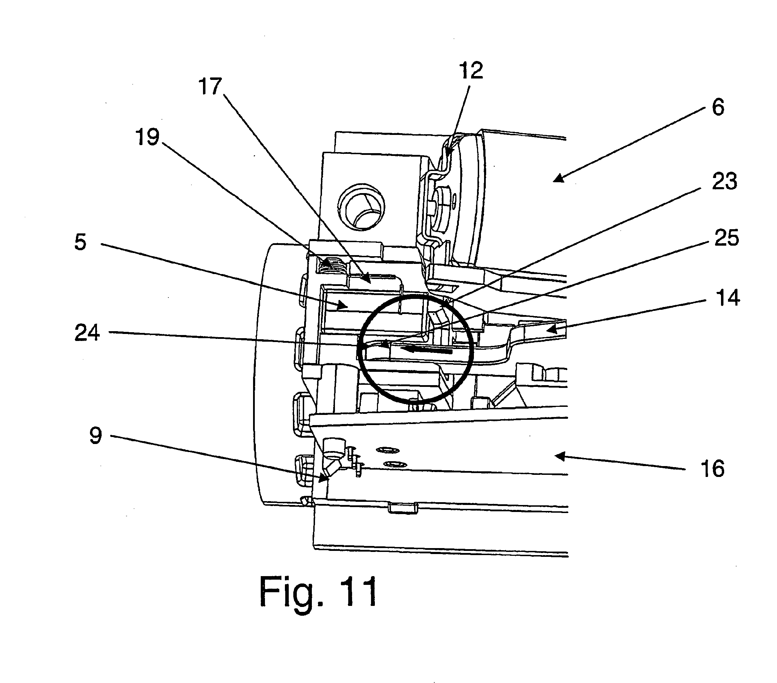

Wie bereits erwähnt und in Fig. 6 näher zu sehen ist, ist ein Übertragungsmittel 14 als Antriebsmittel zwischen dem Elektromotor 6 und dem Sperrbolzen 5 angeordnet. Das Übertragungsmittel 14 ist wiederum als ein Umlenkhebel ausgestaltet, der vom Schneckenrad 13 bewegt wird. Zwischen dem Übertragungsmittel 14 und dem Sperrbolzen 5 befindet sich ein Kopplungsmittel 23 zur Übertragung der Antriebskraft auf den Sperrbolzen 5. Das Kopplungsmittel 23 besteht aus einer in Fig. 11 sichtbaren Aussparung 24 im Sperrbolzen 5 sowie einem in Fig. 5 sichtbaren Zapfen 25 am Umlenkhebel 14. Wie man anhand der Fig. 11 erkennt, fährt der Zapfen 25 am Umlenkhebel 14 beim Aufschieben der Verriegelungseinrichtung 4 während der Montage in die Aussparung 24 am Sperrbolzen 5 ein, so dass im montierten Zustand der Zapfen 25 in die Aussparung 24 zur Bewegung des Sperrbolzens 5 eingreift. Während der Sperrbolzen 5 außerhalb des Gehäuses 7 befindlich ist, ist das Übertragungsmittel 14 im Gehäuse 7 angeordnet Allerdings ragt das Übertragungsmittel 14 aus dem Gehäuse 7 heraus, wie man anhand von Fig. 5 erkennt, und zwar in einen freien Bereich am Sockel 9 hinein. Dieser Bereich am Sockel 9 nimmt bei an der Lenkradsäule 1 montiertem Gehäuse 7 das Führungsmittel 17 mit dem Sperrbolzen 5 auf. Dadurch kann dann das Übertragungsmittel 14 mit dem Sperrbolzen 5 zu dessen Bewegung in der beschriebenen Weise zusammenwirken.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann eine derartige Verriegelungseinrichtung 4 nicht nur an der Lenkradsäule 1 sondern auch an einem sonstigen funktionsrelevanten Betriebsaggregat des Kraftfahrzeugs Verwendung finden. Bei einem solchen Betriebsaggregat kann es sich beispielsweise um den Getriebeschalthebel, um den Wählhebel für ein Automatikgetriebe o. dgl. handeln, wobei die Kräfte dann in den Lagerbock für den Getriebeschalthebel oder für den Wählhebel eingeleitet werden.

### Bezugszeichen-Liste:

- 1:: Lenkradsäule
- 2:: Lenkradwelle
- 3:: Sperrkranz (an der Lenkradwelle)
- 4:: Verriegelungseinrichtung
- 5:: Sperrbolzen
- 6:: Antrieb / Elektromotor
- 7:: Gehäuse
- 8:: Deckel (von Gehäuse)
- 9:: Sockel (von Gehäuse)
- 10:: Motorhalter
- 11:: Sicherung
- 12:: Haltebügel
- 13:: Schneckenrad
- 14:: Übertragungsmittel / Umlenkhebel
- 15:: Sicherungsschieber
- 16:: Leiterplatte
- 17:: Führungsmittel
- 18:: Führungsplatte
- 19:: Feder
- 20:: Führungsschiene
- 21,21':: Pfeil (Montagerichtung)
- 22:: Niederhalter
- 23:: Kopplungsmittel
- 24:: Aussparung (im Sperrbolzen)
- 25:: Zapfen (am Umlenkhebel)
- 26:: Steckeraufnahme
- 27:: Schraube

## Patentansprüche

1. Lenkradsäule (1) für ein Kraftfahrzeug mit einer daran angeordneten Verriegelungsvorrichtung, mit einer in der Lenkradsäule (1) angeordneten Lenkradwelle (2), mit einem zwischen einer ersten und einer zweiten Position bewegbaren Sperrbolzen (5) zur Verriegelung der Lenkradwelle (2), wobei der Sperrbolzen (5) in der ersten Position in blockierenden Eingriff mit der Lenkradwelle (2) bringbar ist und in der zweiten Position außer Eingriff mit der Lenkradwelle (2) steht, mit einem Antrieb (6) zur Bewegung des Sperrbolzens (5), und mit einem an der Lenkradsäule (1) anordenbaren Gehäuse (7), wobei der Antrieb (6) im Gehäuse (7) befindlich ist, **dadurch gekennzeichnet, dass** der Sperrbolzen (5) außerhalb des den Antrieb (6) aufnehmenden Gehäuses (7) befindlich ist, und dass der Sperrbolzen (5) ein in die Lenkradsäule (1) integrierter Bestandteil der Lenkradsäule (1) ist.

2. Lenkradsäule nach Anspruch 1, **dadurch gekennzeichnet, dass** ein Übertragungsmittel (14) zwischen dem Antrieb (6) und dem Sperrbolzen (5) angeordnet ist, und dass das Übertragungsmittel (14) im Gehäuse (7) befindlich ist sowie aus dem Gehäuse (7) herausragt, derart dass das Übertragungsmittel (14) mit dem Sperrbolzen (5) zu dessen Bewegung zusammenwirken kann.

3. Lenkradsäule nach Anspruch 1 oder 2, **dadurch gekennzeichnet, dass** das Übertragungsmittel (14) als ein Umlenkhebel (14) ausgestaltet ist.

4. Lenkradsäule nach Anspruch 1, 2 oder 3, **dadurch gekennzeichnet, dass** ein Kopplungsmittel (23) zwischen dem Übertragungsmittel (14) und dem Sperrbolzen (5) befindlich ist.

5. Lenkradsäule nach einem der Ansprüche 1 bis 4, **dadurch gekennzeichnet, dass** das Kopplungsmittel (23) aus einer Aussparung (24) im Sperrbolzen (5) sowie einem Zapfen (25) am Umlenkhebel (14) besteht, wobei im montierten Zustand der Zapfen (25) in die Aussparung (24) eingreift.

6. Lenkradsäule nach einem der Ansprüche 1 bis 5, **dadurch gekennzeichnet, dass** das Gehäuse (7) einen Deckel (8) sowie einen Sockel (9) umfasst.

7. Lenkradsäule nach einem der Ansprüche 1 bis 6, **dadurch gekennzeichnet, dass** das Gehäuse (7) wenigstens teilweise aus Kunststoff besteht, und dass der Sockel (9) ebenfalls aus Kunststoff besteht.

8. Lenkradsäule nach einem der Ansprüche 1 bis 7, **dadurch gekennzeichnet, dass** es sich bei dem Kunststoff um einen thermoplastischen Kunststoff handelt, derart dass der Sockel (9) sowie der Deckel (8) als ein Spritzgießteil herstellbar ist.

9. Lenkradsäule nach einem der Ansprüche 1 bis 8, **dadurch gekennzeichnet, dass** ein Führungsmittel (17) mit dem Sperrbolzen (5) zu dessen Kraftabstützung zusammenwirkt, und dass das Führungsmittel (17) für den Sperrbolzen (5) ein in die Lenkradsäule (1) integrierter Bestandteil der Lenkradsäule (1) ist.

10. Lenkradsäule nach einem der Ansprüche 1 bis 9, **dadurch gekennzeichnet, dass** eine Führungsplatte (18) an der Lenkradsäule (1) zur Aufnahme des Sperrbolzens (5) und/oder des Führungsmittels (17) angeordnet ist.

11. Lenkradsäule nach einem der Ansprüche 1 bis 10, **dadurch gekennzeichnet, dass** eine an der Führungsplatte (18) angeordnete Feder (19) für den Sperrbolzen (5) Bestandteil der Lenkradsäule (1) ist, und dass die Feder (19) den Sperrbolzen (5) mit einer elastischen Kraft in Richtung der Lenkradwelle (2) beaufschlagt.

12. Lenkradsäule nach einem der Ansprüche 1 bis 11, **dadurch gekennzeichnet, dass** der Sperrbolzen (5) und/oder das Führungsmittel (17) und/oder die Führungsplatte (18) aus Metall bestehen.

13. Lenkradsäule nach einem der Ansprüche 1 bis 12, **dadurch gekennzeichnet, dass** eine Führungsschiene (20) an der Führungsplatte (18) für die Montage des Gehäuses (7) an der Lenkradsäule (1) befindlich ist.

14. Lenkradsäule nach einem der Ansprüche 1 bis 13, **dadurch gekennzeichnet, dass** die Verriegelungseinrichtung (4) mit der Führungsplatte (18) verschraubt ist.

15. Lenkradsäule nach einem der Ansprüche 1 bis 14, **dadurch gekennzeichnet, dass** die Verriegelungseinrichtung (4) in etwa in "12-Uhr"-Position auf der Lenkradsäule (1) platziert ist.

## Claims

1. A steering wheel column (1) for a motor vehicle having a locking device arranged on it, with a steering wheel shaft (2) arranged in the steering wheel column (1), with a movable blocking bolt (5) between a first and a second position for locking the steering wheel shaft (2), wherein the blocking bolt (5) can be brought into the first position in a blocking engagement with the steering wheel shaft (2) and is disengaged from the steering wheel shaft (2) in the second position, with a drive (6) for moving the blocking bolt (5), and with a housing which can be arranged on the steering wheel column (1), wherein the drive (6) is located in the housing (7), **characterized in that** the blocking bolt is located outside of the housing (7) accommodating the drive (6), and that the blocking bolt (5) is a component of the steering wheel column (1) integrated into the steering wheel column (1).

2. A steering wheel column according to claim 1, **characterized in that** a means of transmission (14) is arranged between the drive (6) and the blocking bolt (5), and that the means of transmission (14) is located in the housing (7) and protrudes from the housing (7), in such a manner that the means of transmission (14) can interact with the blocking bolt (5) in regard to its motion.

3. A steering wheel column according to claim 1 or 2 **characterized in that** the means of transmission (14) is designed as a reversing lever (14).

4. A steering wheel column according to claim 1, 2 or 3, **characterized in that** a coupling means (23) is located between the means of transmission (14) and the blocking bolt (5).

5. A steering wheel column according to one of claims 1 to 4, **characterized in that** the coupling means (23) consists of a notch (24) in the blocking bolt (5) as well as a pin (25) on the reversing lever (14), wherein in the mounted state the pin (25) engages in the notch (24).

6. A steering wheel column according to one of claims 1 to 5, **characterized in that** the housing (7) comprises a lid (8) as well as a base (9).

7. A steering wheel column according to one of claims 1 to 6, **characterized in that** the housing (7) consists at least in part of plastic, and that the base (9) also consists of plastic.

8. A steering wheel column according to one of claims 1 to 7, **characterized in that** the plastic is a thermoplastic material, such that the base (9) as well as the lid (8) can be produced as an injection molding part.

9. A steering wheel column according to one of claims 1 to 8, **characterized in that** a guide means (17) interacts with the blocking bolt (5) in its force support, and that the guide means (17) for the blocking bolt (5) is a component of the steering wheel column (1) integrated into the steering wheel column (1)

10. A steering wheel column according to one of claims 1 to 9, **characterized in that** a guide plate (18) is arranged on the steering wheel column (1) for receiving the blocking bolt (5) and/or the guide means (17).

11. A steering wheel column according to one of claims 1 to 10, **characterized in that** a spring (19) arranged on the guide plate (18) for the blocking bolt (5) is a component of the steering wheel column (1), and that the spring (19) supplies the blocking bolt (5) with an elastic force in the direction of the steering wheel shaft (2).

12. A steering wheel column according to one of claims 1 to 11, **characterized in that** the blocking bolt (5) and/or the guide means (17) and/or the guide plate (18) is consists of metal.

13. A steering wheel column according to one of claims 1 to 12, **characterized in that** a guide rail (20) is located on the guide plate (18) for assembling the housing (7) on the steering wheel column (1).

14. A steering wheel column according to one of claims 1 to 13, **characterized in that** the locking device (4) is bolted together with the guide plate (18).

15. A steering wheel column according to one of claims 1 to 14, **characterized in that** the locking device (4) is placed approximately in the "12 o'clock" position on the steering wheel column (1).

## Revendications

1. Colonne de direction (1) pour un véhicule à moteur, équipée d'un dispositif de verrouillage , avec un arbre de direction (2) disposé dans la colonne de direction (1), avec une tige de blocage (5), mobile entre une première et une deuxième position, pour le verrouillage de l'arbre de direction (2), la tige de blocage (5) pouvant être amené dans la première position en engrènement de blocage avec l'arbre de direction (2) et dans la deuxième position hors de l'engrènement avec l'arbre de direction (2), avec un dispositif d'entraînement (6) pour le déplacement de la tige de blocage (5), et avec un boîtier (7) pouvant être disposé sur la colonne de direction (1), le dispositif d'entraînement (6) se trouvant dans le boîtier (7), **caractérisée en ce que** la tige de blocage (5) se trouve hors du boîtier (7) logeant le dispositif d'entraînement (6) et **en ce que** la tige de blocage (5) est une partie de la colonne de direction (1) intégrée dans la colonne de direction (1).

2. Colonne de direction selon la revendication 1, **caractérisée en ce qu'**un moyen de transmission (14) est disposé entre le dispositif d'entraînement (6) et la tige de blocage (5) et **en ce que** le moyen de transmission (14) se trouve dans le boîtier (7) et dépasse hors du boîtier, de façon à ce que le moyen de transmission (14) puisse interagir avec la tige de blocage (5) pour déplacer celle-ci.

3. Colonne de direction selon la revendication 1 ou 2, **caractérisée en ce que** le moyen de transmission (14) est conçu comme un levier de renvoi (14).

4. Colonne de direction selon la revendication 1, 2 ou 3, **caractérisée en ce qu'**un moyen de couplage (23) se trouve entre le moyen de transmission (14) et la tige de blocage (5).

5. Colonne de direction selon l'une des revendications 1 à 4, **caractérisée en ce que** le moyen de couplage (23) est constitué d'un évidement (24) dans la tige de blocage (5) ainsi que d'un tourillon (25) sur le levier de renvoi (14), le tourillon (25) s'emboîtant dans l'évidement (24) dans l'état monté.

6. Colonne de direction selon l'une des revendications 1 à 5, **caractérisée en ce que** le boîtier (7) comprend un couvercle (8) ainsi qu'un socle (9).

7. Colonne de direction selon l'une des revendications 1 à 6, **caractérisée en ce que** le boîtier (7) est constitué au moins partiellement de matière plastique et **en ce que** le socle (9) est également constitué de matière plastique.

8. Colonne de direction selon l'une des revendications 1 à 7, **caractérisée en ce que** la matière plastique est une matière plastique thermoplastique, de façon à ce que le socle (9) ainsi que le couvercle (8) puisse être moulés par injection.

9. Colonne de direction selon l'une des revendications 1 à 8, **caractérisée en ce qu'**un moyen de guidage (17) interagit avec la tige de blocage (5) afin d'assurer le support des forces, et **en ce que** le moyen de guidage (17) pour la tige de blocage (5) est une partie de la colonne de direction (1) intégrée dans la colonne de direction (1).

10. Colonne de direction selon l'une des revendications 1 à 9, **caractérisée en ce qu'**une plaque de guidage (18) est disposée sur la colonne de direction (1) pour le logement de la tige de blocage (5) et/ou du moyen de guidage (17).

11. Colonne de direction selon l'une des revendications 1 à 10, **caractérisée en ce qu'**un ressort (19), disposé sur la plaque de guidage (18), pour la tige de blocage (5), fait partie de la colonne de direction (1) et **en ce que** le ressort (19) exerce une force élastique sur la tige de blocage (5) en direction de l'arbre de direction (2).

12. Colonne de direction selon l'une des revendications 1 à 11, **caractérisée en ce que** la tige de blocage (5) et/ou le moyen de guidage (17) et/ou la plaque de guidage (18) sont constitués de métal.

13. Colonne de direction selon l'une des revendications 1 à 12, **caractérisée en ce qu'**un rail de guidage (20) se trouve sur la plaque de guidage (18) pour le montage du boîtier (7) sur la colonne de direction (1).

14. Colonne de direction selon l'une des revendications 1 à 13, **caractérisée en ce que** le dispositif de verrouillage (4) est vissé avec la plaque de guidage (18)

15. Colonne de direction selon l'une des revendications 1 à 14, **caractérisée en ce que** le dispositif de verrouillage (4) est placé sur la colonne de direction (1) approximativement en position « 12 heures ».
